**Europäisches Patentamt**

**European Patent Office**

**Office européen des brevets**

(19)

(11) Numéro de publication: **0 033 285**
**B1**

# FASCICULE DE BREVET EUROPEEN

(45) Date de publication du fascicule du brevet:
**25.01.84**

(21) Numéro de dépôt: **81400122.8**

(22) Date de dépôt: **28.01.81**

(51) Int. Cl.³: **B 01 F 5/00, C 04 B 7/44**

(54) **Dispositif de mélange avec turbulence de fluides gazeux et de particules solides.**

(30) Priorité: **28.01.80 FR 8001794**

(43) Date de publication de la demande:
**05.08.81 Bulletin 81/31**

(45) Mention de la délivrance du brevet:
**25.01.84 Bulletin 84/4**

(84) Etats contractants désignés:
**AT BE DE FR GB IT**

(56) Documents cités:
**FR - A - 1 488 751**
**FR - A - 2 430 788**
**GB - A - 945 086**
**US - A - 3 098 704**
**US - A - 3 261 593**

(73) Titulaire: **LAFARGE COPPEE, 28, rue Emile Ménier,**
**F-75782 Paris Cedex (FR)**

(72) Inventeur: **Duplouy, Alain, 7, rue de la Gare,**
**F-91570 Bievres (FR)**
Inventeur: **Le Bras, Bernard, Résidence**
**Commodore 1, chemin des 2 Saisons,**
**F-26200 Montelimar (FR)**

(74) Mandataire: **Le Brusque, Maurice,**
**CREUSOT-LOIRE 15 rue Pasquier, F-75383 Paris**
**Cedex 08 (FR)**

ACTORUM AG

Dispositif de mélange avec turbulence de fluides gazeux et de particules solides

L'invention a pour objet un dispositif de mélange avec turbulance de fluides gazeux contenant des particules solides en suspension.

L'invention s'applique plus particulièrement à la calcination des matières minérales, dans les installations de préparation du clinker de ciment.

Dans ces installations, on réalise la cuisson à haute température d'une matière pulvérulente appelée aussi farine et constituée généralement d'un mélange de calcaire et d'argile. Les installations de préparation par voie sèche comportent un four rotatif servant à fritter la farine, qui peut être remplacé par un four à lit fluidisé. A la sortie du four, la farine cuite et refroidie par air dans un refroidisseur. En revanche, avant d'être introduite dans le four, la matière subit un préchauffage dans une installation constituée généralement d'une série de cyclones où elle circule à contre-courant de gaz chauds constitués par les fumées sortant du four et/ou d'un dispositif de refroidissement des matières sortant du four.

D'une façon générale, dans les procédés de cuisson des matériaux silicocalcaires utilisant un four rotatif ou à lit fluidisé et des échangeurs à cyclones, il est apparu, ces dernières années, qu'il était avantageux que la plus grande partie de la matière brute ait perdu son gaz carbonique avant son entrée dans le four rotatif.

En effet, on s'était rendu compte que le dégagement de l'anhydride carbonique dans le talus de matière du four rotatif entraînait une déstabilisation de l'écoulement du produit pulvérulent et une arrivée peu régulière de ce produit dans la zone de cuisson du four rotatif.

C'est pourquoi il est apparu judicieux de fractionner l'apport calorifique et de fournir, entre la sortie du four et l'échangeur, le combustible nécessaire au processus endothermique de perte de l'anhydride carbonique. L'air nécessaire à ce combustible provient généralement du refroidisseur soit en passant par le four, soit par une conduite parallèle au four.

Cet apport calorifique supplémentaire est effectué dans un système de calcination placé dans le circuit des fumées, entre la sortie du four et le cyclone le plus bas du préchauffeur.

Le produit pulvérulent est extrait à une température de 720 à 780° C du préchauffeur, introduit dans la zone d'apport calorifique, calciné dans cette région, puis introduit, avec les fumées, dans le cyclone inférieur de l'échangeur pour être séparé des fumées et dirigé vers le four.

Il apparaît que, dans ce type de procédé, les calories produites par le combustible introduit entre la sortie du four et l'échangeur sont utilisées de façon optimale si elles sont absorbées par la réaction endothermique de calcination de la farine entre le point d'introduction de cette farine dans la zone de combustion et le cyclone inférieur de l'échangeur qui sépare la farine et les fumées. Un échange thermique moins favorable conduit à des fumées plus chaudes en sortie du cyclone inférieur et à un début de calcination dans les étages supérieurs de l'échangeur.

Les températures sont alors remontées à tous les étages de l'échangeur et en particulier à la sortie des fumées de l'échangeur, ce qui conduit à un rendement thermique plus faible de l'installation. Un transfert efficace des calories apportées pour la calcination de la farine est donc nécessaire à un bon rendement de l'installation.

Le problème a reçu une première réponse par un allongement du cheminement de la farine et des gaz de combustion dans une conduite très longue avant le cyclone, pouvant décrire des boucles, de façon à augmenter le temps de séjour nécessaire à la réaction. L'expérience montre qu'il est très difficile, par cette voie, d'atteindre les longueurs qui donneraient le temps de séjour nécessaire dans ce type d'écoulement et l'on est conduit à éviter la perte de rendement qui en résulterait sur l'échangeur par l'adjonction d'un étage d'échangeur supplémentaire.

Mais on sait que tout accroissement de hauteur des tours d'échangeurs augmente considérablement les coûts.

Or, la longue durée des temps de séjour nécessaires dans la solution décrite ci-dessus résulte de la faiblesse des turbulences existant dans une conduite entre les gaz chauds et la farine.

C'est pourquoi on a eu l'idée d'intensifier la turbulence et, par ce moyen, d'accélérer le brassage d'homogénisation de la farine dans les gaz et des températures dans les flux gazeux et les transferts thermiques entre gaz et farine. Jusqu'à présent, on a proposé différents systèmes comportant des chambres de mélange destinées à intensifier la turbulence, notamment par la création d'un courant tourbillonnaire. La chambre de mélange peut avoir par exemple une paroi latérale de forme conique munie, à sa base, d'une volute d'entrée et, à sa partie supérieure, d'une volute de sortie reliée au dernier cyclone du préchauffeur. Il se produit un tourbillon à l'intérieur de la chambre, et un second courant de gaz, injecté dans l'axe de la volute de sortie, forme un jet qui pénètre à l'intérieur de ce tourbillon pour s'y mélanger avec le premier courant, l'ensemble étant évacué par la volute de sortie.

Des matières solides peuvent être introduites dans l'un ou l'autre des courants de gaz et l'on peut également injecter dans la chambre un combustible de façon à produire une flamme qui se mélange avec les gaz et les matières à l'intérieur de la chambre.

Généralement, la volute de sortie est placée à la partie supérieure de la chambre, et les gaz formant le tourbillon sont introduits à la partie inférieure par une volute d'entrée dans l'axe de laquelle est placé un cône relié à une goulotte d'évacuation pour récupérer les matières solides qui s'y accumulent par gravité lors des arrêts ou ralentissements de l'installation. Ce cône risque de se comporter avec la volute d'entrée inférieure comme un petit cyclone qui collecte continuellement et de manière indésirable une partie du produit pulvérulent.

On a également proposé de renverser ce dispositif, la volute d'entrée étant placée à la partie supérieure de la chambre et la volute de sortie à la partie inférieure. Dans un mode de réalisation de ce genre, décrit par exemple dans le brevet USA No 3098704, la chambre de mélange est associée à une chambre inférieure dans laquelle sont introduits de l'air et un combustible qui y brûlent, les gaz chauds étant évacués par une cheminée qui pénètre à l'intérieur de la chambre de mélange, dans l'axe de la volute de sortie.

Si l'on introduit dans une telle chambre des matières solides, les morceaux les plus gros non entraînés par le courant de gaz risquent de s'accumuler sur la paroi inférieure de la volute de sortie, autour de la cheminée de la chambre de combustion.

L'invention a pour objet un dispositif perfectionné permettant d'effectuer un excellent mélange par turbulence de deux courants de gaz dans lesquels est introduite une matière solide, tout en assurant la récupération et le recyclage des particules solides qui pourraient se déposer à la base de la chambre de mélange. Les dispositions permettent en outre, grâce à ce recyclage, d'allonger le temps de séjour des matières solides à l'intérieur de la chambre de mélange et, de ce fait, facilitent l'utilisation de combustibles solides ayant un pouvoir calorifique relativement faible.

Conformément à l'invention, la volute de sortie est placée à un niveau intermédiaire entre l'entrée supérieure du courant tourbillonnaire et l'entrée inférieure du courant axial et la paroi limitant la partie inférieure de la chambre de mélange située au-dessous de la volute de sortie, s'évase vers le haut entre l'entrée inférieure et la volute de sortie, pour la récupération et le recyclage dans le courant axial des particules solides s'échappant du tourbillon.

Le dispositif de mélange selon l'invention présente une application particulièrement intéressante dans les installations de cimenterie qui comprennent un four de clinkérisation relié à un dispositif de préchauffage en suspension de la matière crue à contre-courant du gaz, un dispositif de refroidissement de clinker sortant du four et une chambre de précalcination aux deux extrémités de laquelle sont introduits deux courants de gaz, l'un formant un tourbillon et l'autre un jet axial, la matière préchauffée étant incorporée à l'un au moins de ces courants. Dans cette application particulière, la chambre de précalcination est constituée par le dispositif de mélange selon l'invention, le courant tourbillonnaire et le courant axial étant constitués par l'un au moins des courants de gaz sortant du four et du dispositif de refroidissement.

L'invention va maintenant être décrite, en se référant à plusieurs modes de réalisation, donnés à titre d'exemples et représentés sur les dessins annexés.

La fig. 1 est une vue schématique en élévation d'un premier mode de réalisation de l'invention.

La fig. 2 est une vue en élévation d'un deuxième mode de réalisation.

La fig. 3 est une vue en élévation d'une autre variante.

La fig. 4 est une vue en perspective d'un mode de réalisation plus perfectionné.

La fig. 5 est une vue schématique partielle d'une installation de production de ciment équipée d'un dispositif de mélange selon la fig. 1.

La fig. 6 représente en variante l'application du dispositif selon la fig. 2 à une installation de cuisson de ciment.

La fig. 7 représente une autre variante d'application du dispositif à une installation de cuisson de ciment.

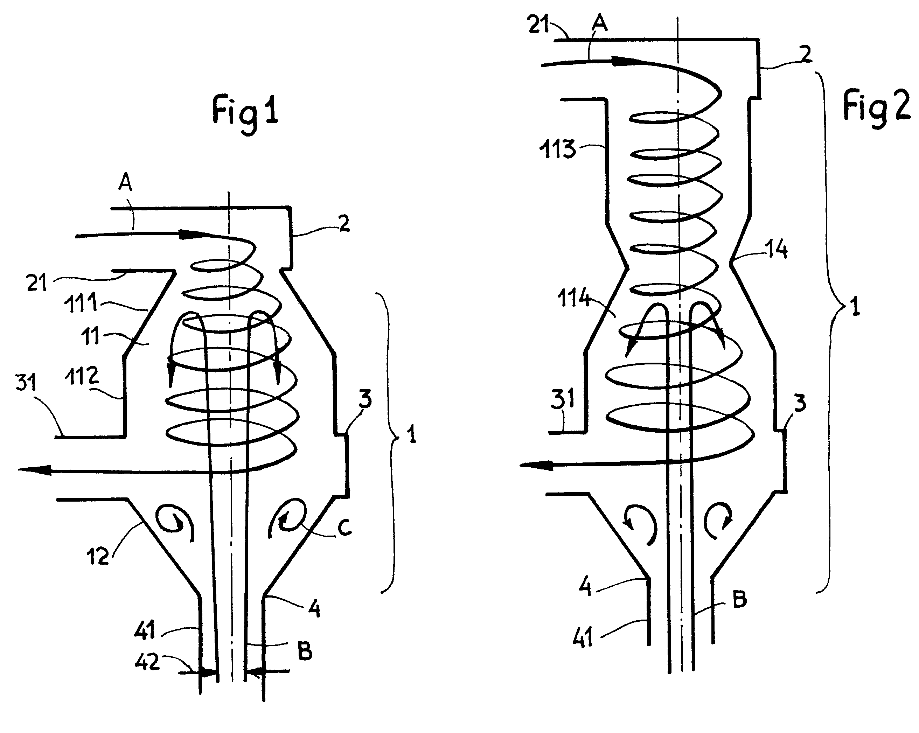

Le dispositif représenté fig. 1 se compose essentiellement d'une chambre de mélange 1 dans laquelle est formé un tourbillon d'un courant de gaz A introduit par une entrée en volute 2 et évacué par une volute de sortie 3. A l'intérieur du tourbillon ainsi formé est introduit un second courant de gaz B alimenté par une entrée 4 placée dans l'axe de la chambre à l'extrémité de celle-ci opposée à la volute d'entrée 2.

La chambre de mélange 1 est donc du type dans lequel le courant axial B pénètre à l'intérieur du tourbillon jusqu'à un certain point de retournement où il se mélange avec le courant de gaz A pour être entraîné avec lui; on augmente ainsi les turbulences et les échanges de chaleur.

Dans les chambres de ce type, il est habituel de placer la volute d'entrée du tourbillon à la partie inférieure de la chambre et la volute de sortie à la partie supérieure, et d'introduire le courant axial B du haut vers le bas. Dans le cas où le courant axial est constitué par les fumées chaudes sortant d'une chambre de combustion, on a proposé d'inverser cette disposition, le courant tourbillonnaire se développant de haut en bas. Cependant, lorsque l'on veut introduire des matières solides dans la chambre, la première disposition semble plus logique puisqu'elle permet de faire tomber par gravité les matières solides dans l'axe de la volute de sortie du tourbillon.

En tout cas, quelle que soit l'orientation de la chambre, les volutes d'entrée et de sortie sont placées normalement aux deux extrémités.

Une originalité de l'invention réside donc dans le fait que la volute de sortie est placée à un niveau intermédiaire entre l'entrée 2 du courant tourbillonnaire A et l'entrée 4 du courant axial B alors que, jusqu'à présent, la volute de sortie était placée à la hauteur de l'entrée du courant B.

Ainsi, la chambre de mélange comprend deux parties placées respectivement au-dessus et en dessous de la volute de sortie 3.

La partie supérieure 11 de la chambre est placée entre la volute d'entrée et la volute de sortie. C'est là que se forme le tourbillon du courant A. De ce fait, cette partie 11 a une forme évasée du haut vers le bas, et peut être constituée, par exemple, par une surface conique 111 éventuellement prolongée par une paroi cylindrique 112 comme on l'a représenté sur la fig. 1.

La partie inférieure 12 de la chambre de mélange est placée entre la volute de sortie 3 et l'entrée 4 du courant axial B et elle est limitée par une surface inclinée s'évasant vers le haut et constituée par exemple d'une paroi conique ou pyramidale 112.

On aurait pu s'attendre que la partie inférieure 12, en jouant le rôle de divergent, risquerait d'entraîner des courts-circuits du courant de fluide B injecté par l'entrée inférieure 4 et qui serait entraîné directement par la volute de sortie sans monter dans l'axe de la chambre.

Or, les observations ont montré au contraire que, même pour des angles de cône assez faibles et pour les débits et vitesses du même ordre dans les deux entrées 2 et 4, le jet du fluide B remonte axialement à l'intérieur du tourbillon presque jusqu'à l'entrée en volute 2 avant de se mélanger au fluide A introduit par l'entrée 2.

Cet effet peut s'observer même si l'on ne donne pas au courant B une vitesse très importante pour l'injecter à l'intérieur du tourbillon. En effet, celui-ci provoque un effet d'aspiration du courant central et il suffit que celui-ci soit bien canalisé par l'entrée 4 pour remonter à l'intérieur du tourbillon.

La partie 12 présente alors l'avantage de récupérer les particules solides qui ne sont pas entraînées par le tourbillon, et les renvoyer à l'intérieur de la chambre 11 en les faisant reprendre par le courant ascendant B. Il se produit d'ailleurs à l'intérieur de la partie 12, autour du jet central B, des rouleaux de recirculation C qui favorisent également le mélange des différents fluides avec les matières solides injectées.

Ainsi, la chambre de mélange qui vient d'être décrite assure niveau très élevé de turbulences favorables à un excellent mélange des fluides et par conséquent à un excellent échange thermique. Il en résulte que les matières solides qui peuvent être injectées dans l'un des courants de fluide absorbent une quantité de chaleur importante et que l'on peut réaliser la calcination des matières solides si l'un au moins des courants de gaz a été échauffé par un brûleur.

Dans le mode de réalisation de la fig. 1, on placera de préférence des moyens d'injection de combustibles dans la gaine 41 débouchant dans l'entrée inférieure 4 de façon à produire une combustion diffuse dans le courant ascendant B en amont de l'orifice 4. Cette combustion se développera dans le courant B qui parcourt dans la chambre un chemin plus long que le courant A puisqu'il doit traverser la partie inférieure 12, puis pénétrer à l'intérieur du tourbillon avant d'être entraîné par celui-ci.

Pour cette raison, les matières solides seront également injectées de préférence dans le courant B de façon à obtenir un temps de séjour aussi long que possible.

Dans ce cas, il faut évidemment que le courant B soit constitué par un gaz comburant ou, en tout cas, qu'il contienne de l'oxygène en excès de façon à assurer une combustion.

Si le gaz B ne contient pas d'oxygène en excès et si le gaz comburant doit être constitué par le courant A arrivant par l'entrée supérieure 2, il est alors préférable d'utiliser la disposition représentée sur la fig. 2.

Dans ce cas, la partie supérieure 11 de la chambre de mélange 1 est constituée elle-même de deux sections. La volute d'entrée 2 du courant A débouche à la partie supérieure d'une section haute 113 constituée par une chambre cylindrique dans laquelle se développe le tourbillon du haut vers le bas. La section 113 se termine par un rétrécissement 14 qui débouche dans le haut d'une section basse 114 constituée de façon identique à la partie supérieure 11 de la chambre représentée sur la fig. 1.

Le courant A injecté par la gaine 21 est constitué de préférence par un gaz riche en oxygène, comme de l'air chaud. De la sorte, si l'on injecte un combustible proportions voulues dans la gaine 21, il se développe une flamme très chaude dans le tourbillon formé entre la volute d'entrée 2 et le rétrécissement 14. Celui-ci permet de confiner dans la section basse 114 le courant de gaz B qui peut ainsi être constitué de fumées relativement pauvres en oxygène sans risquer de gêner le développement de la flamme.

Les matières solides sont introduites dans le courant A et subissent donc une première élévation de température dans la section haute 113.

Le tourbillon se poursuit dans la section basse 114, jusqu'à la volute de sortie 3 et la température des matières augmente encore au contact du courant chaud B qui, dans la section 114, se mélange au tourbillon.

Ainsi, dans un espace relativement réduit, l'association des deux sections superposées 113 et 114 dans lesquelles se développe le tourbillon et l'introduction axiale du courant inférieur B permettent de réaliser un temps de séjour important des matières et une élévation de température suffisante pour provoquer leur calcination.

Si l'on compare la chambre de mélange qui vient d'être décrite aux dispositifs connus, on constate que l'originalité essentielle vient de sa forme comprenant deux sections évasées s'élargissant à partir de deux orifices d'entrée placés l'un à la partie supérieure, l'autre à la partie inférieure, jusqu'à une volute de sortie placée dans la partie centrale. De la sorte, la chambre ne comporte plus de parois transversales planes qui favorisent les collages et l'accumulation de matières à proximité de la volute de sortie, même lorsque celle-ci est placée à la partie supérieure de la chambre. Au lieu de gêner le développement du tourbillon, la partie inférieure, évasée vers le haut, de la chambre recueille les matières solides et favorise la constitution de courants de recirculation qui augmentent encore le temps de séjour des particules dans la chambre.

Il a été constaté que le temps de séjour d'une matière solide introduite dans la chambre pouvait être supérieure à plusieurs fois le temps de séjour des gaz du fait de ce recyclage par la partie inférieure 12 d'une partie de l'écoulement tourbillonnaire descendant le long de la paroi cylindrique.

Ce recyclage qui affecte essentiellement les particules les plus lourdes de la matière solide introduite dans la chambre facilite la cuisson de matières broyées sommairement en allongeant le temps de séjour des particules les plus grosses et les plus longues à cuire. Mais, en outre, il est ainsi possible de réaliser l'élévation de température dans la chambre au moyen de combustibles solides ayant un pouvoir calorifique faible et/ou une faible teneur en matières volatiles. Il est en effet nécessaire que ces combustibles restent suffisamment longtemps dans la chambre de mélange pour épuiser la quantité de chaleur qu'ils sont capables de fournir. Le recyclage de matières qui se produit à l'intérieur de la chambre est donc favorable à l'utilisation de tels combustibles.

Or, on a constaté qu'il était possible d'augmenter encore le temps de séjour des matières solides dans la chambre en adoptant des dispositions qui permettent d'augmenter le recyclage dans la partie inférieure 12.

En effet, en jouant judicieusement sur les débits et les vitesses du courant tourbillonnaire A et du courant axial B, on a constaté que, même en éloignant encore plus l'entrée inférieure 4 de la volute de sortie 3, on pouvait encore obtenir la pénétration du courant axial B dans le tourbillon formé dans la partie supérieure 11.

C'est pourquoi, dans le mode de réalisation représenté sur la fig. 3, on a augmenté l'importance de la partie inférieure 12, celle-ci étant limitée par une paroi cylindrique 121 de même diamètre que la paroi 112 de la chambre 11, et prolongée vers le bas par une surface conique 122 se raccordant à l'entrée 4 dans laquelle débouche la conduite 41 d'introduction du courant axial B.

Le combustible solide est introduit dans la conduite 41 par un dispositif d'alimentation 72 et les particules solides sont entraînées par le courant ascendant B.

Pour augmenter au maximum le temps de séjour des particules solides, on donne à la partie inférieure 12 la hauteur h maximale compatible avec le maintien de l'aspiration du courant axial B dans le tourbillon formé par le courant A et sortant par la volute 3.

Une partie M1 du combustible, formé par les particules les plus lourdes ou se trouvant sur la périphérie du jet du courant B où la vitesse est plus faible, ne parvient pas à la partie supérieure 11 et redescend directement vers l'entrée 4 où elle est entrainée à nouveau vers le haut.

En revanche, une autre partie M2 du combustible parvient jusqu'au tourbillon A et se mélange à celui-ci. Du fait de l'effet de centrifugation, le courant de gaz n'entraîne pas dans la volute de sortie 3 la totalité de ces particules, les plus lourdes M3 redescendant le long de la paroi 121 dans la chambre 12 où elles sont à nouveau prises par le courant ascendant B.

Ainsi, une même particule peut rester un certain temps dans la chambre de mélange avant d'être entraînée vers la sortie.

Pour augmenter encore le temps de séjour du combustible dans la chambre de mélange, on peut perfectionner l'installation de différentes façons.

Tout d'abord, pour mieux répartir les particules solides dans le courant ascendant, on peut également introduire une certaine quantité de combustible directement dans la chambre 1 par un organe de distribution 73 placé au-dessus de l'entrée 4.

D'autre part, le temps de séjour du combustible peut encore être augmenté en faisant déboucher la volute de sortie 3 dans un dispositif de séparation 65 qui peut être constitué d'une simple chambre de détente dans laquelle se déposent les parties plus grossières de la matière évacuée par la volute de sortie 3. Ces matières qui se rassemblent dans le bas de la chambre 65 sont évacuées par une conduite 66 qui débouche dans la conduite d'alimentation 41 de façon à les réinjecter dans le courant de gaz B, un tel recyclage permettant d'obtenir une combustion complète.

Une telle disposition peut être utilisée notamment lorsque l'encombrement de l'installation n'est pas limité.

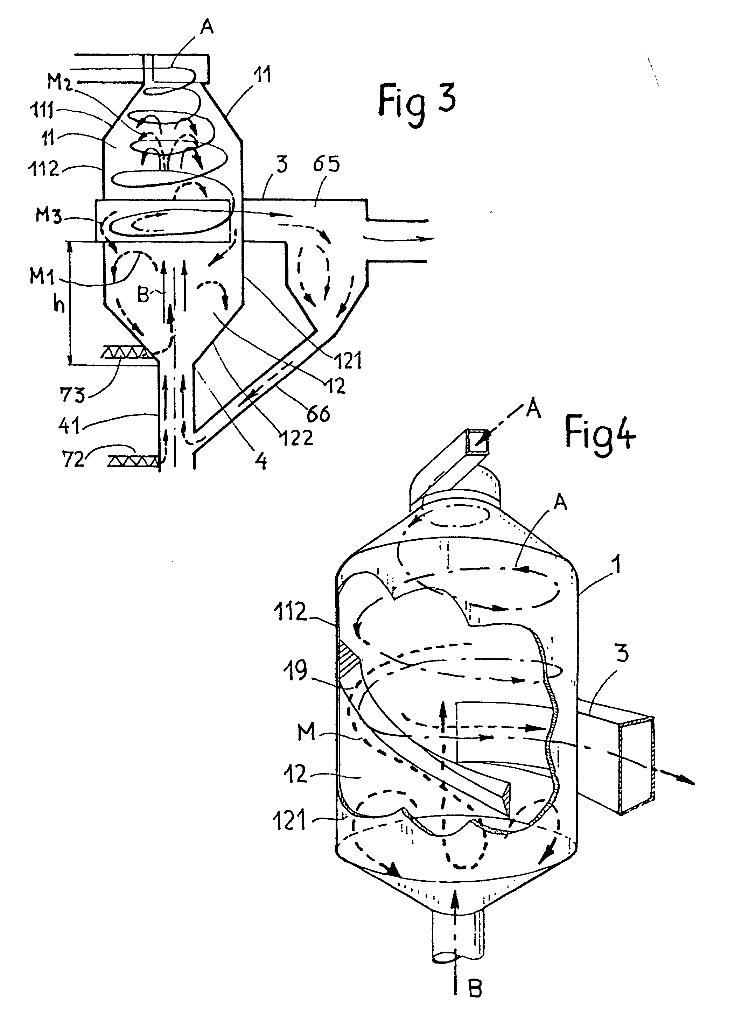

On peut aussi, comme on l'a représenté sur la vue en perspective de la fig. 4, placer à l'intérieur de la chambre 1 une nervure hélicoïdale 19 qui longe la paroi cylindrique 121 et est éventuellement prolongée au-dessus de la volute de sortie 3 le long de la paroi cylindrique 112.

Cette nervure 19, qui est tournée dans le sens du courant tourbillonnaire A et peut avoir une inclinaison de l'ordre de 35° par rapport aux génératrices du cylindre 121, intercepte une partie M du courant tourbillonnaire s'échappant par la volute 3, et notamment les particules solides les plus lourdes qui sont ainsi dirigées vers la partie inférieure 12 pour y être recyclées dans le courant ascendant B.

Bien entendu, lorsque la chambre de mélange 1 est utilisée à des températures élevées, la nervure 19 peut être réalisée dans un matériau réfractaire comme la paroi interne de la chambre 1.

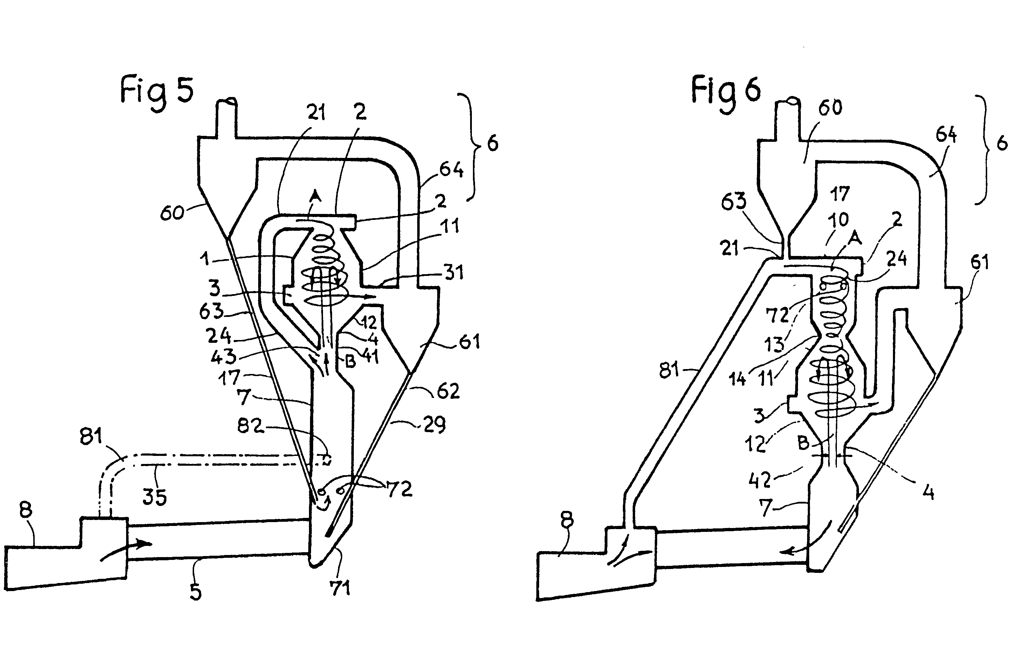

La chambre de mélange dont on vient de décrire plusieurs modes de réalisation s'adapte particulièrement bien aux installations de production de clinker de ciment. Les fig. 5, 6 et 7 représentent schématiquement plusieurs exemples d'adaptation à une installation de cimenterie des diverses variantes de la chambre de mélange selon l'invention.

Une installatin de production de ciment comprend essentiellement un four rotatif 5 légèrement incliné à la partie supérieure duquel sont introduites les matières premières préalablement réchauffées dans un dispositif de préchauffage 6 constitué, par exemple, d'une succession de cyclones fixes dont on n'a représenté que les deux derniers sur les fig. 5 et 6. De façon bien connue, la matière recueillie à la base du dernier cyclone 61 et introduite par une conduite 62 à l'entrée du four rotatif 5 et plus précisément sur une surface inclinée 71 de raccordement de l'extrémité supérieure du four à une gaine verticale 7 par laquelle les gaz sortant du four sont conduits vers le préchauffeur 6 en passant par la chambre de mélange et de calcination.

Les matières introduites par l'orifice supérieur du four 5 sont traitées à l'intérieur de celui-ci et le

**0 033 285**

clinker ainsi formé est évacué par l'orifice inférieur vers un dispositif de refroidissement par air 8.

Sur la fig. 5, la chambre de mélange et de calcination est du type représenté sur la fig. 1. La gaine de sortie 7 est munie à sa partie inférieure d'orifices 72 d'injection de combustible à une hauteur suffisante pour permettre le développement d'une flamme diffuse.

Dans ce mode de réalisation, la chambre de mélange 1 est alimentée uniquement à partir de la gaine 7 de sortie du four 5 dont le débit est réparti entre le courant tourbillonnaire A et le courant axial B.

A cet effet, la gaine 7 se divise à sa partie supérieure en une bifurcation 43, constituée, d'une part, de la conduite 41 débouchant dans l'entrée inférieure 4 de la chambre de mélange et, d'autre part, d'une conduite de dérivation 24 reliée par la conduite 21 à la volute d'entrée supérieure 2 de la chambre.

Ainsi, le courant axial inférieur B et le courant tourbillonnaire supérieur A sont constitués par deux parties des gaz évacués du four par la gaine verticale 7. Les débits respectifs des deux courants de gaz peuvent être réglés par un choix judicieux des sections des conduites 41 et 24. Cependant, il sera sans doute utile de monter sur la conduite 41 et éventuellement sur la conduite 24 une vanne à étranglement non représentée permettant de régler les débits respectifs.

Les matières réchauffées dans le dispositif de préchauffage 6 sont recueillies à la base de l'avant-dernier cyclone 60 et introduites par une conduite 63 à la partie inférieure de la gaine verticale 7 de telle façon qu'elles puissent être entraînées par le courant ascendant de gaz sortant du four. De préférence, cette introduction de matière se fera au-dessous des moyens d'injection de combustible 72.

On voit que, dans le mode de réalisation représenté, les matières solides sont contenues en suspension dans les deux courants de gaz A et B introduits dans la chambre de mélange.

Si les gaz sortant du four 5 contiennent de l'air en excès, la combustion pourra se produire dans la gaine 7.

Cependant, le gaz comburant peut également être constitué par de l'air chaud venant du refroidisseur 8 où il s'est réchauffé au contact du clinker sortant du four. Dans ce cas, cet air chaud est prélevé par une conduite 81 qui débouche par un orifice 82 à la base de la gaine verticale 7, au-dessus des orifices d'injection de combustible 72.

Ainsi, il se développe dans la gaine 7 une combustion diffuse qui provoque l'élévation de température de la farine introduite par la conduite 63 et dont la calcination se termine dans la chambre de mélange 1. Grâce à la récupération des particules solides, effectuée par la partie inférieure 12, toute la matière ayant subi cette précalcination est finalement évacuée par la volute de sortie 3 reliée par une conduite 31 au dernier cyclone 61 qui effectue la séparation de la farine envoyée au four par la conduite 62 et des gaz remontant vers le préchauffeur et notamment vers l'avant-dernier cyclone 6 par la gaine 64.

Le mode d'installation qui vient d'être décrit présente notamment un intérêt dans le cadre d'augmentation de production d'installations anciennes dans lesquelles la calcination était auparavant réalisée dans le four. On notera en particulier que la disposition de la chambre de mélange et sa forme compacte permettent particulièrement bien de l'adapter à l'extrémité d'une gaine d'évacuation verticale des gaz du four en amont du dernier cyclone.

Dans le mode de réalisation de la fig. 6, la gaine verticale 7 d'évacuation des gaz du four est plus courte. En effet, dans ce cas la combustion n'est pas produite dans la gaine 7, mais dans la section haute 113 de la chambre de mélange 1 qui est du type représenté sur la fig. 2.

Dans ce cas, la partie supérieure de la gaine verticale 7 débouche directement dans l'orifice d'entrée inférieur 4 de la chambre de mélange, celui-ci étant muni d'une vanne à étranglement 42 qui permet de régler la section du jet du courant ascendant B et, par conséquent, sa vitesse de pénétration à l'intérieur de la chambre de mélange 1.

Le courant B contient alors seulement les matières qui ont pu être entraînées par les gaz sortant du four. En effet, la farine brute préchauffée venant de l'avant-dernier cyclone 60 est déversée directement dans la conduite 21 d'alimentation de la volute d'entrée 2. Dans la conduite 21 arrive également l'air chaud venant du refroidisseur 8 et prélevé par la conduite 81 qui, dans ce cas, se raccorde à la conduite 21. De la sorte, si l'on place des brûleurs 72 à la partie supérieure de la section 113, un peu au-dessous de la volute d'entrée 2, il se développe une combustion dans le tourbillon du courant A dans la section haute 113 en présence de la farine introduite par la conduite 63 venant du cyclone 60.

La calcination de cette farine commencée dans la section haute 113 se poursuit et se termine dans la section basse 114 de la chambre grâce à l'apport calorifique et au brassage intense créés par le jet des fumées B venant du four rotatif 5 et introduites à la base de la chambre par l'entrée 4.

Les gaz et la farine calcinés sont extraits de la chambre par la volute de sortie 3 reliée à l'entrée du cyclone 61 par la conduite 31.

Dans certains cas, il peut être nécessaire de dériver une partie ou la totalité des gaz chauds provenant du four 5 en raison de la teneur élevée de ceux-ci en composés nuisibles au bon fonctionnement de l'installation (concrétion, concentration élevée d'impuretés dans le produit fini, etc.). Dans ce cas, le débit de gaz alimentant les deux entrées de la chambre de mélange doit venir, dans sa totalité ou en tout cas dans sa plus grande partie, du refroidisseur 8. On utilise alors le mode de réalisation de la fig. 5, la conduite 81 de sortie des gaz du refroidissement étant branchée en amont de la bifurcation 43 pour alimenter simultanément la conduite 41 d'entrée du courant axial B et, par la conduite de dérivation 24, la conduite 21 d'entrée du courant tourbillonnaire A.

Les gaz sortant du four sont dérivés vers un dispositif d'épuration, une partie de ceux-ci pouvant être mélangée à l'air venant du refroidisseur 8 lorsque le bon déroulement du procédé n'exige pas un by-pass total.

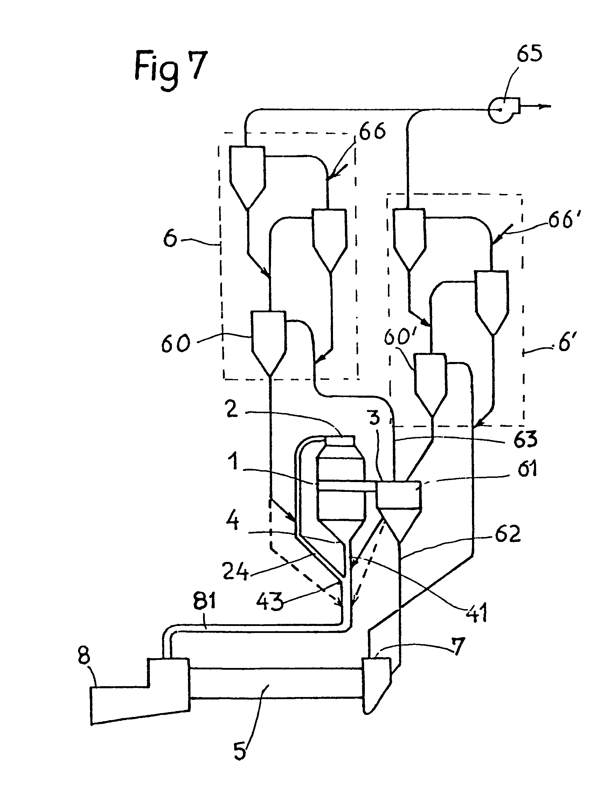

Une autre adaptation de la chambre de mélange a été représentée sur la fig. 7. Dans ce cas, selon une disposition connue, on utilise deux préchauffeurs à suspension 6 et 6' qui peuvent être munis chacun d'un ventilateur, mais peuvent aussi être branchés en parallèle sur un ventilateur commun 65.

Comme on vient de le décrire, la chambre de précalcination 1 est alimentée par les gaz venant du refroidisseur 8 par l'intermédiaire de la conduite 81 qui alimente l'entrée inférieure 4 par la conduite 41 et l'entrée supérieure 2 par la conduite de dérivation 24.

La volute de sortie 3 débouche dans le cyclone 61 qui sépare la matière des gaz, la matière étant dirigée à l'entrée du four 5 et les gaz étant aspiré par le préchauffeur à cyclone 6.

D'autre part, les gaz venant du four et se rassemblant dans la gaine de sortie 7 sont aspirés par le même ventilateur 65 par l'intermédiaire du préchauffeur à cyclone 6'.

La matière crue est introduite à la partie supérieure de chacun des deux préchauffeurs, en 66 dans le préchauffeur 6 et en 66' dans le préchauffeur 6'. La matière descend de cyclone en cyclone en se réchauffant au contact des gaz chauds aspirés par le ventilateur 65 et la matière ainsi préchauffée et sortant des derniers cyclones 60 du préchauffeur 6 et 60' du préchauffeur 6' est introduite en amont de la chambre de précalcination 1.

Cette introduction de la matière peut se faire en amont de la bifurcation 43, le débit de matière se répartissant alors, sensiblement dans le même rapport que les gaz, entre les deux entrées 2 et 4 de la chambre de précalcination.

Cependant, on peut aussi introduire séparément les matières venant des préchauffeurs 6 et 6' dans la conduite 41 qui alimente le courant axial B par l'entrée inférieure 4 et dans la conduite 24 qui alimente le courant tourbillonnaire A par l'entrée supérieure 2. D'ailleurs, les capacités respectives des préchauffeurs 6 et 6' et les débits de matières aux entrées 66 et 66' seront évidemment choisis en fonction des températures et des débits des gaz aspirés à travers le four 5 et le refroidisseur 8.

Bien entendu, on pourrait prévoir d'autres combinaisons, la matière préchauffée sortant du cyclone 60' pouvant par exemple être introduite dans la gaine de sortie des gaz du cyclone 61 pour s'y mélanger avec la matière venant du préchauffeur 6, la sortie de matière du cyclone 60 constituant alors une alimentation unique de la chambre de précalcination.

Les essais qui ont été réalisés ont montré que la chambre de mélange qui vient d'être décrite permet, lorsqu'on l'installe entre le four rotatif et l'échangeur à cyclone, de réaliser et de terminer, dans un espace restreint et de manière très efficace, les échanges thermiques nécessaires à la calcination de la farine provenant de l'échangeur. En particulier, en plaçant la chambre de mélange directement en débouché de la gaine verticale 7 de sortie des gaz du four, on utilise dans les meilleures conditions l'énergie thermique des fumées.

Le haut niveau de turbulence atteint dans la chambre permet de terminer les échanges thermiques de calcination avant que les matières calcinées contenues dans les fumées s'évacuant par la volute de sortie n'en soient séparées par le cyclone inférieur de l'échangeur placé en aval de la chambre. La faiblesse des quantités d'anhydride carbonique restant à dégager dans la farine calcinée introduite dans le four rotatif garantit une excellente stabilité d'écoulement de la farine à travers le four.

Bien entendu, l'invention ne se limite pas aux détails des deux modes de réalisation qui ont été décrits, d'autres variantes pouvant être imaginées ainsi que d'autres applications de l'invention.

**Revendications**

1. Dispositif de mélange avec turbulence de deux courants de fluides gazeux, dont l'un au moins contient des particules solides en suspension, constitué par une chambre de mélange (1) limitée par une paroi de révolution autour d'un axe vertical, s'évasant vers le bas entre une entrée (2) placée à son extrémité supérieure et une volute de sortie (3), le premier courant gazeux (A) formant un tourbillon se développant vers le bas entre l'entrée supérieure (2) et la volute de sortie (3) et le second courant (B) étant introduit par une entrée (4) placée à l'extrémité inférieure et dans l'axe de la chambre de mélange (1) et formant un jet axial aspiré vers le haut dans l'axe du tourbillon pour se mélanger au courant tourbillonnaire (A), l'ensemble étant évacué par la volute de sortie (3), caractérisé par le fait que la volute de sortie (3) est placée à un niveau intermédiaire entre l'entrée supérieure (2) du courant tourbillonnaire (A) et l'entrée inférieure (4) du courant axial (B), la paroi limitant la partie inférieure (12) de la chambre de mélange (1) située en dessous de la volute de sortie (3) s'évase vers le haut entre l'entrée inférieure (4) et la volute de sortie (3), pour la récupération et le recyclage dans le courant axial (B) des particules solides s'échappant du tourbillon.

2. Dispositif de mélange selon la revendication 1, caractérisé par le fait que les particules solides sont mises en suspension dans le courant axial (B) introduit par l'entrée inférieure (4) de la chambre de mélange (1).

3. Dispositif de mélange selon la revendication 1, caractérisé par le fait que le courant axial (B) est alimenté par une conduite (41) débouchant dans l'entrée inférieure (4) et munie d'une vanne (42) de réglage du débit du courant axial.

4. Dispositif de mélange selon l'une des revendications précédentes, caractérisé par le fait que le courant tourbillonnaire (A) est prélevé sur le débit du courant axial (B) par une conduite de dérivation (24) reliée par une bifurcation (43) à la conduite (41) d'alimentation du courant axial (B) et débouchant à l'entrée supérieure (2) de la chambre (1) de mélange.

5. Dispositif de mélange selon la revendication 1, caractérisé par le fait que la partie supérieure (11) de formation du tourbillon située au-dessus de la sortie inférieure (12) de la chambre de mélange (1) comprend deux sections superposées, une section haute (113) formant chambre de combustion à l'extrémité supérieure de laquelle sont placés l'entrée (2) du premier courant de fluide (A) et des moyens (72) d'injection de combustible et une section basse (114) en forme de surface évasée vers le bas jusqu'à la volute de sortie (3) et formant chambre de mélange, la section haute (113) et la section basse (114) étant reliées par un passage (14) de plus faible diamètre.

6. Dispositif de mélange selon la revendication 1, caractérisé par le fait que la hauteur de la partie inférieure (12) de la chambre de mélange (1) entre la volute de sortie (3) et l'entrée (4) du courant axial (B) est limitée à la valeur maximale compatible avec le maintien de l'aspiration du courant axial (B) dans le tourbillon formé par le courant (A).

7. Dispositif de mélange selon les revendications 1 à 6, caractérisé par le fait que la partie inférieure (12) de la chambre de mélange (1) est limitée par une paroi cylindrique (121) de diamètre sensiblement égal à celui de la volute de sortie (3), prolongée vers le bas par une paroi conique (122) se raccordant à l'entrée (4) du courant axial (B).

8. Dispositif de mélange selon la revendication 7, carctérisé par le fait que la chambre de mélange (1) est munie intérieurement d'une nervure (19) s'enroulant en hélice dans le sens du courant tourbillonnaire (A) le long de la paroi cylindrique (121) de la partie inférieure (12) de la chambre (1) et pouvant être prolongé au-dessus de la volute de sortie (3) le long de la paroi cylindrique (112) de la partie supérieure (11) de la chambre (1).

9. Dispositif de mélange selon l'une des revendications précédentes, caractérisé par le fait que la volute de sortie (3) débouche dans un dispositif (65) de séparation des parties les plus grossières de la matière évacuée, celles-ci étant évacuées par une conduite (66) qui débouche dans la conduite d'alimentation (41) et réinjectées dans le courant axial (B).

10. Dispositif de mélange selon l'une des revendications précédentes caractérisé par le fait que la chambre de mélange (1) est munie de moyens (73) d'injection de combustible débouchant dans la partie inférieure (12) de recyclage.

11. Installations de cimenterie comprenant un four de clinkérisation relié par une gaine (7) de sortie des fumées à un dispositif (6) de préchauffage en suspension de la matière crue à contre-courant des gaz, un dispositif (8) de refroidissement du clinker sortant du four (5) au contact d'un gaz évacué par une conduite (81) et une chambre de précalcination dans laquelle sont introduits un courant de gaz formant un tourbillon, la matière venant du dispositif (6) de préchauffage et éventuellement un combustible, le mélange étant évacué par une volute de sortie dans un dispositif de séparation (61) de la matière évacuée par une sortie (62) vers le four (5) et des gaz évacués par une sortie (63) vers le dispositif de préchauffage (6), caractérisé par le fait que la chambre de précalcination est constituée par un dispositif de mélange réalisé selon l'une des revendications précédentes, le courant tourbillonnaire (A) et le courant axial (B) étant constitués par l'un au moins des courants de gaz sortant du four (5) et du dispositif de refroidissement (8).

12. Installation de cimenterie selon la revendication 11, caractérisée par le fait que la conduite d'évacuation des gaz de refroidissement est reliée à l'entrée (2) du courant tourbillonnaire (A) et que la gaine (7) de sortie des gaz du four est reliée à l'entrée (4) du courant axial (B).

13. Installation de cimenterie selon la revendication 12, caractérisée par le fait que la chambre de mélange est réalisée selon la revendication 5, la section haute (113) étant munie à sa partie supérieure de moyens d'injection en combustible (72) et les matières venant du dispositif de préchauffage (6) étant introduites dans la conduite (81) d'évacuation des gaz de refroidissement et entrainées vers la section haute (113).

14. Installation de cimenterie selon la revendication 11, caractérisée par le fait que la chambre de mélange (1) est réalisée selon la revendication 4 et est alimentée à partir de la gaine (7) de sortie des fumées du four, qui débouche en amont de la bifurcation (43), le débit des fumées étant réparti entre le courant tourbillonnaire (A) et le courant axial (B).

15. Installation de cimenterie selon la revendication 14, caractérisée par le fait que la gaine (7) de sortie des fumées du four (5) est munie à sa partie inférieure de moyens (72) d'injection de combustible et de moyens (17) d'introduction de la matière dans le courant ascendant de gaz sortant du four.

16. Installation de cimenterie selon la revendication 15, caractérisée par le fait que la conduite (81) d'évacuation des gaz de refroidissement débouche à la base de la gaine (7), au-dessus des moyens d'injection de combustible (72).

17. Installation de cimenterie selon la revendiction 11, caractérisée par le fait que la chambre de mélange (1) est réalisée selon la revendication 4 et est alimentée à partir de la conduite (81) d'évacuation des gaz de refroidissement qui débouche en amont de la bifurcation (43), le débit des gaz étant réparti entre le courant tourbillonnaire (A) et le courant axial (B).

18. Installation de cimenterie selon la revendication 12 et comprenant, de façon connue en soi, deux dispositifs parallèles (6) et (6') de préchauffage, caractérisé par le fait que l'un des dispositifs de préchauffage (6) est alimenté par les gaz de refroidissement, par l'intermédiaire de la chambre de mélange (1) et du dispositif de séparation (61) et que l'autre dispositif de préchauffage (6') est alimenté par les fumées sortant du four (5), par l'intermédiaire de la gaine de sortie (7) et est muni d'une alimentation séparée en matière crue et d'une conduite de sortie de la matière préchauffée débouchant dans l'un au moins des courants de gaz alimentant la chambre de mélange (1).

19. Installation de cimenterie selon la revendication 18, caractérisée par le fait que la conduite (21) d'amenée du courant tourbillonnaire (A) et la conduite (41) d'amenée du courant axial (B) reçoivent l'une les matières sortant du dispositif de préchauffage (6) alimenté par les gaz sortant du refroidisseur (8), et l'autre les matières sortant du dispositif de préchauffage (6') alimenté par les gaz sortant du four (5).

## Patentansprüche

1. Vorrichtung zum Wirbelströmmungsmischen von zwei Strömen von gasförmigen Fluiden, von welchen wenigstens eines Feststoffteilchen in Suspension enthält und die aus einer Mischkammer (1) besteht, die von einer Wand in Form eines Rotationskörpers um eine vertikale Achse begrenzt wird und sich nach unten zwischen einem an ihrem oberen Ende angeordneten Einlass (2) und einer Auslassspirale (3) erweitert, wobei der erste gasförmige Strom (A) einen Wirbel bildet, der sich nach unten zwischen dem oberen Einlass (2) und der Auslassspirale (3) entwickelt und der zweite Gasstrom (B) durch einen am unteren Ende und in der Achse der Mischkammer (1) angeordneten Einlass (4) eingebracht wird und einen axialen Strom bzw. Strahl bildet, der nach oben in der Achse des Wirbels angesaugt wird, um sich mit dem Wirbelstrom (A) zu vermischen, wobei die Gesamtmenge durch die Auslassspirale (3) ausgetragen wird, dadurch gekennzeichnet, dass die Auslassspirale auf einer Zwischenhöhe zwischen dem oberen Einlass (2) des Wirbelstromes (A) und dem unteren Einlass (4) des Axialstromes (B) angeordnet ist, und dass sich die den unteren Abschnitt (12) der Mischkammer (1) begrenzende Wand, die unterhalb der Auslassspirale (3) gelegen ist, nach oben zwischen dem unteren Einlass und der Auslassspirale (3) erweitert, um die Wiedergewinnung und Rückführung der aus dem Wirbel entwichenen Feststoffteilchen in den axialen Strom (B) zu ermöglichen.

2. Mischvorrichtung nach Anspruch 1, dadurch gekennzeichnet, dass die Feststoffteilchen im axialen Strom (B) suspendiert sind, der durch den unteren Einlass (4) der Mischkammer (1) eingebracht wird.

3. Mischvorrichtung nach Anspruch 1, dadurch gekennzeichnet, dass der axiale Strom (B) von einer Leitung (41) gespeist wird, die in den unteren Einlass (4) mündet und mit einer Regelklappe (42) für die Strömungsmenge des axialen Stromes versehen ist.

4. Mischvorrichtung nach einem der vorhergehenden Ansprüche, dadurch gekennzeichnet, dass der Wirbelstrom (A) aus der Strömungsmenge des axialen Stromes (B) durch eine Abzweigleitung (24) entnommen wird, die über einer Gebelung (43) mit der Zufuhrleitung (41) für den axialen Strom (B) verbunden ist und am oberen Einlass (2) der Mischkammer (1) mündet.

5. Mischvorrichtung nach Anspruch 1, dadurch gekennzeichnet, dass der obere Abschnitt (11) der Wirbelausbildung, der oberhalb des unteren Abschnittes (12) der Mischkammer (1) gelegen ist, zwei übereinandergelagerte Abschnitte umfasst, nämlich einen oberen Abschnitt (113), der eine Brennkammer umfasst, an deren oberen Ende der Einlass (2) des ersten Fluidstromes (A) und die Einspritzeinrichtung (72) für den Brennstoff angeordnet sind und einen unteren Abschnitt (114) in Form einer sich nach unten bis zur Auslassspirale erweiternden Fläche, welche die Mischkammer bildet, und dass der obere Abschnitt (113) und der untere Abschnitt (114) über einen Durchlass (14) von geringerem Durchmesser miteinander verbunden sind.

6. Mischvorrichtung nach Anspruch 1, dadurch gekennzeichnet, dass die Höhe des unteren Abschnittes (12) der Mischkammer (1) zwischen der Auslassspirale (3) und dem Einlass (4) des axialen Stromes (B) auf den maximalen Wert begrenzt ist, der mit der Aufrechterhaltung des Ansaugens des axialen Stromes (B) in den ausgebildeten Wirbel, der als Strom (A) bezeichnet wurde, vereinbar ist.

7. Mischvorrichtung nach einem der Ansprüche 1 bis 6, dadurch gekennzeichnet, dass der untere Abschnitt (12) der Mischkammer (1) von einer zylindrischen Wand (121) begrenzt wird, deren Durchmesser annähernd gleich dem der Auslassspirale (3) ist und die nach unten von einer konischen Wand (122) verlängert ist, die an den Einlass (4) des axialen Stromes (B) angeschlossen ist.

8. Mischvorrichtung nach Anspruch 7, dadurch gekennzeichnet, dass die Mischkammer (1) innen mit einer Rippe (19) versehen ist, die sich spiralförmig in der Richtung des Wirbelstromes (A) entlang der zylindrischen Wand (121) des unteren Abschnittes (12) der Kammer (1) aufrollt bzw. erstreckt und oberhalb der Auslassspirale (3) entlang der zylindrischen Wand (112) des oberen Abschnittes (11) der Kammer (1) verlängert sein kann.

9. Mischvorrichtung nach einem der vorhergehenden Ansprüche, dadurch gekennzeichnet, dass die Auslassspirale (3) in eine Trennvorrichtung (65) für die gröbsten Teilchen aus dem ausgetragenen Material mündet, wobei diese Teilchen durch eine Leitung (66) ausgetragen werden, die in die Zufuhrleitung (41) mündet, und erneut in den axialen Strom (B) eingespritzt werden.

10. Mischvorrichtung nach einem der vorhergehenden Ansprüche, dadurch gekennzeichnet, dass die Mischkammer (1) mit einer Brennstoffeinspritzeinrichtung (73) versehen ist, die in den unteren Rückführungsabschnitt (12) mündet.

11. Zementherstellungsanlage mit einem Klinkerofen, der mittels eines Rauchauslassschachtes mit einer Vorrichtung (6) zum Vorwärmen des in Suspension befindlichen Rohmaterials im Gegenstrom der Gase verbunden ist, mit einer Kühlungseinrichtung (8) für den aus dem Ofen (5) ausgetragenen Klinker bei Kontakt mit einem Gas, das von einer Leitung (81) ausgetragen bzw. zugeführt wird und mit einer Vorkalzinierungskammer, in welche ein einen Wirbel bildendet Gasstrom, das von der Vorwärmeeinrichtung (6) kommende Material und gegebenenfalls ein Brennstoff einbringbar sind, wobei die Mischung von einer Auslassspirale in einer Trennvorrichtung (61) für das durch einen Auslass (62) zum Ofen (5) hin abgegebene Material und die durch einen Auslass (63) zur Vorwärmvorrichtung (6) hin abgegebenen Gase abgegeben wird, dadurch gekennzeichnet, dass die Vorkalzinierungskammer aus einer nach einem der vorhergehenden Ansprüche ausgebildeten Mischvorrichtung besteht, und dass der Wirbelstrom (A) und der axiale Strom (B) aus wenigstens einen der Gasströme bestehen, die aus dem Ofen (5) und aus der Kühlungseinrichtung (8) ausgetragen werden.

12. Zementherstellungsanlage nach Anspruch 11, dadurch gekennzeichnet, dass die Auslassleitung für die Kühlgase an den Einlass (2) des Wirbelstromes (A) und dass der Auslassschacht (7) für die Ofengase an dem Einlass (4) des axialen Stromes (B) angeschlossen sind.

13. Zementherstellungsanlage nach Anspruch 12, dadurch gekennzeichnet, dass die Mischkammer nach Anspruch 5 ausgebildet ist, dass der obere Abschnitt (113) in seinem oberen Teil mit einer Brennstoffeinspritzvorrichtung (72) versehen ist, und dass die aus der Vorwärmeinrichtung (6) ausgetragenen Materialien in die Auslassleitung (81) für die Kühlungsgase eingebracht und zum oberen Abschnitt (113) hin mitgerissen werden.

14. Zementherstellungsanlage nach Anspruch 11, dadurch gekennzeichnet, dass die Mischkammer nach Anspruch 4 ausgebildet ist und ausgehend vom Auslassschacht (7) für die Ofengase gespeist wird, der oberhalb der Gabelung (43) mündet, wobei die Gasmenge zwischen dem Wirbelstrom (A) und dem axialen Strom (B) aufgeteilt wird.

15. Zementherstellungsanlage nach Anspruch 14, dadurch gekennzeichnet, dass der Auslassschacht (7) für die Gase des Ofens (5) in seinem unteren Abschnitt mit einer Brennstoffeinspritzeinrichtung (72) und mit einer Einrichtung (17) zum Einführen des Materials in den vom Ofen aufsteigenden Gasstrom versehen ist.

16. Zementherstellungsanlage nach Anspruch 15, dadurch gekennzeichnet, dass die Auslassleitung (81) für die Kühlungsgase an der Basis des Schachtes (7) oberhalb der Brennstoffeinspritzeinrichtung (72) mündet.

17. Zementherstellungsanlage nach Anspruch 11, dadurch gekennzeichnet, dass die Mischkammer (1) nach Anspruch 4 ausgebildet ist und ausgehende von der Leitung (81) zum Austragen der Kühlungsgase gespeist wird, die stromaufwärts von der Gabelung (43) mündet, und dass die Gasmenge zwischen dem Wirbelstrom (A) und dem axialen Strom (B) aufgeteilt wird.

18. Zementherstellungsanlage nach Anspruch 12, die in an sich bekannter Weise mit zwei parallelen Vorwärmeinrichtungen (6) und (6') versehen ist, dadurch gekennzeichnet, dass eine der Vorwärmeinrichtungen (6) von den Kühlgasen unter Zwischenschaltung der Mischkammer (1) und der Trenneinrichtung (61) gespeist wird, und dass die andere Vorwärmeinrichtung (6') von den vom Ofen (5) abgegebenen Gasen unter Zwischenschaltung des Auslassschachtes (7) gespeist wird und mit einer getrennten Zufuhr für Rohmaterial versehen ist und eine Auslassleitung für das vorgewärmte Material aufweist, die in wenigstens einen der Gasströme mündet, mit welchen die Mischkammer (1) gespeist wird.

19. Zementherstellungsanlage nach Anspruch 18, dadurch gekennzeichnet, dass von der Leitung (21) für die Zufuhr des Wirbelstromes (A) und der Leitung (41) für die Zufuhr des Axialstromes (B) eine derselben die aus der mit von der Kühlungseinrichtung (8) abgegebenen Gasen gespeisten Vorwärmeinrichtung (6) herrührenden Materialien und die andere derselben die von der mit den vom Ofen (5) abgegebenen Gasen gespeisten Vorwärmeinrichtung (6') herrührenden Gase aufnimmt.

## Claims

1. A device for turbulent mixing of two streams of gaseous fluids, of which at least one contains solid particles in suspension, which consists of a mixing chamber (1) bounded by a surface of revolution around a vertical axis, widening downwards between an inlet (2) situated at its upper end and an outlet volute (3), the first gaseous stream (A) forming a vortex expanding downwards between the upper inlet (2) and the outlet volute (3) and the second stream (B) being introduced by an inlet (4) situated at the lower end and in the axis of the mixing chamber (1) and forming an axial jet drawn upwards along the axis of the vortex to mix with the vortex stream (A), the whole being discharged by the outlet volute (3), characterised in that the outlet volute (3) is situated at an intermediate level between the upper inlet (2) of the vortex stream (A) and the lower inlet (4) of the axial stream (B) and in that the wall bounding the lower part (12) of the mixing chamber (1) which is situated below the outlet volute (3) widens upwards between the lower inlet (4) and the outlet volute (3), for the recovery and recycling in the axial stream (B) of solid particles escaping from the vortex.

2. A mixing device according to claim 1, characterised in that the solid particles are put in suspension in the axial stream (B) introduced through the lower inlet (4) of the mixing chamber (1).

3. A mixing device according to claim 1, characterised in that axial stream (B) is supplied through a duct (41) opening into the lower inlet (4) and equipped with a valve (42) for regulating the flow of the axial stream.

4. A mixing device according to one of the preceding claim, characterised in that the vortex stream (A) is withdrawn from the flow of the axial stream (B) through a branch duct (24) which is joined by a bifurcation (43) to the supply duct (41) of the axial stream (B) and opens into the upper inlet (2) of the mixing chamber (1).

5. A mixing device according to claim 1, characterised in that the upper part (11) for formation of the vortex, which is situated above the lower part (12) of the mixing chamber (1), comprises two superposed sections, a high section (113) forming a combustion chamber at the top end of which are situated the inlet (2) of the first stream of liquid (A) and means (72) for injecting fuel, and a low section (114) in the shape of a surface widened downwards as far as the oulet volute (3) and forming a mixing chamber, the high section (113) and the low section (114) being joined by a passage (14) of a smaller diameter.

6. A mixing device according to claim 1, characterised in that the height of the lower part (12) of the mixing chamber (1) between the outlet volute (3) and the inlet (4) of the axial stream (B) is restricted to the maximum value compatible with maintaining the entrainement of the axial stream (B) in the vortex formed by the stream (A).

7. A mixing device according to claims 1 to 6, characterised in that the lower part (12) of the mixing chamber (1) is bounded by a cylindrical wall (121) of a diameter which is substantially equal to that of the outlet volute (3), extended downwards by a conical wall (122) converging at the inlet (4) of the axial stream (B).

8. A mixing device according to claim 7, characterised in that the mixing chamber (1) is fitted internally with a rib (19) winding helically in the direction of the vortex stream (A) along the cylindrical wall (121) of the lower part (12) of the chamber (1) and capable of being extended below the outlet volute (3) along the cylindrical wall (112) of the upper part (11) of the chamber (1).

9. A mixing device according to one of the preceding claims, characterised in that the outlet volute (3) opens into a device (65) for separating the coarsest parts of the discharged material, these parts being discharged by a duct (66) which opens into the supply duct (41) and reinjected into the axial stream (B).

10. A mixing device according to one of the preceding claims, characterised in that the mixing chamber (1) is fitted with fuel injection means (73) opening into the lower part (12).

11. A plant for cement manufacture comprising a clinkering kiln joined by a smoke exit flue (7) to a devise (6) for preheating the raw material in suspension, countercurrent-wise to the gases, a device (8) for cooling the clinker leaving the kiln (5) in contact with a gas discharged through a duct (81) and a precalcination chamber in which are introduced a gaz current forming a vortex, the material from the preheating device (6) and, if appropriate, a fuel, the mixture being discharged through an outlet volute into a device (61) for separating the material discharged through an outlet (62) towards the kiln (5) from the gases discharged through an outlet (63) towards the preheating device (6), characterised in that the precalcination chamber consists of a mixing device constructed according to any one of the preceding claims, the vortex stream (A) and the axial stream (B) consisting of at least one of the gas streams leaving the kiln (5) and from the cooling device (8).

12. A plant for cement manufacture according to claim 11, characterised in that the discharge duct for the cooling gases is connected to the inlet (2) of the vortex stream (A) and in that the exit flue (7) for the kiln fumes is joined to the inlet (4) of the axial stream (B).

13. A plant for cement manufacture according to claim 12, characterised in that the mixing chamber is constructed according to claim 5, the high section (113) being equipped in its upper part with means for injecting fuel (72) and the materials from the preheating device (6) being introduced into the duct (81) for discharging the cooling gases and being entrained into the high section (113).

14. A plant for cement manufacture according to claim 11, characterised in that the mixing chamber (1) is constructed according to claim 4 and is fed from the kiln fumes exit flue (7) which issues upstream of the bifurcation (43), the flow of the gases being distributed between the vortex stream (A) and the axial stream (B).

15. A plant for cement manufacture according to claim 14, characterised in that the exit flue (7) for the fumes of the kiln (5) is equipped in its lower part with fuel injection means (72) and with means (17) for introducing material into the rising stream of gas leaving the kiln.

16. A plant for cement manufacture according to claim 15, characterised in that the duct (81) for discharging the cooling gases opens into the base of the flue (7), above the fuel injection means (72).

17. A plant for cement manufacture according to claim 11, characterised in that the mixing chamber (1) is constructed according to claim 4 and is fed from the duct (81) for discharging the cooling gases which opens upstream of the bifurcation (43), the flow of the gases being distributed between the vortex stream (A) and the axial stream (B).

18. A plant for cement manufacture according to claim 12 and comprising, in a manner known *per se*, two parallel preheating devices (6) and (6'), characterised in that one of the preheating devices (6) is supplied with the cooling gases through the intermediacy of the mixing chamber (1) and of the separation device (61) and in that the other preheating device (6') is supplied with the fumes leaving the kiln (5), through the intermediacy of the exit flue (7) and is equipped with a separate supply of raw material and with an exit duct for the preheated material opening into at least one of the gas streams supplying the mixing chamber (1).

19. A plant for cement manufacture according to claim 18, characterised in that one of the feed ducts (21) of the vortex stream (A) and (41) of the axial stream (B) receives the materials leaving the preheating device (6) fed by the gases leaving the cooler (8); the other duct receiving the materials leaving the preheating device (6') fed by the gases leaving the kiln (5).

Fig 1

Fig 2

0 033 285

Fig 3

Fig 4

Fig 5

Fig 6

Fig 7